(19) Europäisches Patentamt / European Patent Office / Office européen des brevets

(11) **EP 2 315 142 A1**

(12) **EUROPEAN PATENT APPLICATION**

(43) Date of publication:
**27.04.2011 Bulletin 2011/17**

(51) Int Cl.:
***G06F 17/50*** (2006.01)

(21) Application number: **09171955.9**

(22) Date of filing: **01.10.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS**<br><br>(71) Applicant: **Honda Research Institute Europe GmbH**<br>**63073 Offenbach/Main (DE)** | (72) Inventor: **Gräning, Lars**<br>**63179 Obertshausen (DE)**<br><br>(74) Representative: **Rupp, Christian**<br>**Mitscherlich & Partner**<br>**Patent- und Rechtsanwälte**<br>**Sonnenstraße 33**<br>**80331 München (DE)**<br><br>Remarks:<br>Amended claims in accordance with Rule 137(2) EPC. |

(54) **Designing real-world objects using the interaction between multiple design variables and system properties**

(57)    The invention relates to the computerized design of real-world object, using knowledge of already existing designs and their physical performance numbers, wherein during the design process a plurality of design variables $X_i$ are adapted, and wherein the result of the design has improved physical performance numbers $Y_j$ when converted into the real-world object,
wherein the design process is decomposed in parallel streams of optimization modules, each optimization module individually optimizing a group of interrelated design variables,
the functional interrelation between design variables $X_i$ being evaluated using an interaction information I representing the functional dependency between design variables $X_i$ and the physical performance numbers $Y_j$, the interaction information I(S) being calculated as

$$I(S) = D(p(S) \| \hat{p}(S))$$

i.e. the distance D between the observed joint probability distribution $p(S)$ and part-to-whole approximation of the joint probability distribution $\hat{p}(S)$ of the functional dependency between design variables $X_i$ and the physical performance numbers $Y_j$, of already existing designs, S being a set of all considered design variables and the physical performance numbers.

Fig. 2

EP 2 315 142 A1

## Description

### *Background of the invention:*

The target for the automated (i.e. computer-based) optimization of the design of real-world objects, e.g. for the development of race cars, turbine blades or road vehicles is to construct new designs which achieve a desired system performance under pre-defined constraints. The system performance of the design can be expressed in terms of one or more physical parameters such as e.g. aerodynamic/hydrodynamic properties (down-force, drag, ...), weight, etc..

The holistic optimization of a complex design can be an expensive and time consuming process. The extraction and utilization of knowledge about the interrelation between design parts can increase the efficiency of the optimization. But before detailed knowledge about the interrelations can be generated or used, the most significant interrelations have to be identified from the existing pool of designs.

Once all functional relationships have been identified, as an example, this knowledge can be applied for an efficient decomposition of the holistic design ensemble. When designs become too complex to be handled by one optimizer, complex designs are usually decomposed into sets of manageable design parts and distributed to different optimizer. Thus, the design parts can be optimized in parallel. Commonly, the decomposition is done based on the experience of the design engineer or just based on the proximity without explicitly considering the functional interrelation of the parts.

Using a robust computational technique for the identification of functional interrelations between design parts can support the decomposition of the design ensemble into parts. In the end the integration of the computational technique into the design process can increase the efficiency of the optimization.

### *State of the art:*

A known approach for analyzing correlations between variables is the Pearson correlation coefficient. The Person correlation coefficient is limited to the quantification of linear dependencies between the variables. The correlation coefficient is strongly sensitive to outliers and limited to the analysis of the correlation between two variables. Thus the Pearson correlation coefficient is applied to measure the linear direct influence of a design variable to the performance number. A direct extension of the Pearson correlation coefficient is the Spearman rank correlation coefficient. Due to the fact that the Spearman correlation coefficient operates on the rank instead of the sample values itself, the correlation coefficient is not strictly limited to the quantification of linear dependencies. However, the dependency has to follow a strong monotonic relationship. Also the Spearman correlation coefficient is limited to the analysis of the dependency between two parameters.

Following the line of the linear correlation coefficient concerning the analysis of the interrelation between multiple independent design variables and their effect on the dependent physical performance number, multiple regression analysis can be applied [3]. In order to quantify the interrelated influence of the parameters on the dependent variable, interaction terms are added to the regression equation. Although, the analysis is not restricted to linear interactions between the parameters, the kind of functional relationship has to be known in advance.

The probabilistic attempt from the information theory for the quantification of the interrelation between two variables is the known mutual information or trans-information. The mutual information quantifies whether a general dependency between the variables does exist or not. This measure does not make any assumption on the kind of relationship. The mutual information of two discrete random variables can be defined based on the probability distributions or in terms of the Shannon entropy. Furthermore it has been shown that the mutual information is mathematically equivalent to the Kullback-Leibler divergence of the product of the marginal distributions from the random variables joint distribution.

There are various information theoretic approaches that aim at quantifying the information transfer in case of multiple variables. Jakulin [4] finally summarized the majority of these concepts and formalized the concept of the interaction information as an iterating sum of marginal and joint entropies. The interaction information for two variables equals exactly the definition of the mutual information in terms of Shannon entropies. However, the interaction information is defined for N variables as well. While for the case of two variables the value for the interaction information is always above zero, the interaction information for more than two variables can be negative as well. It is said that negative values of the interaction information indicate a redundancy between variables. Jakulin et. al applied the interaction information concept to the analysis of medical data [6] and Graening et. al applied it recently for the investigation of the interrelations from aerodynamic design data [2].

Derived from the mutual information, Jakulin and Bratko [5] explained that the interaction information, generalized to N variables, can be estimated using the Kullback-Leibler divergence (KLD) of the Kirkwood Superposition approximation (KSA) from the joint probability distribution. If the KSA is normalized the resulting estimate of the interaction information is always above zero. Thus one loses the possible interpretation of the interaction information as a measure for redundancy. The authors applied the estimate of the interaction information using the KLD for identifying the significance of the calculated interactions.

Since the KLD is a bin-by-bin distance measure between histograms, the estimate of the interaction information is potentially sensitive to different kind of noise in the data or to discretization errors. Rubner [8] first introduced the Earth Mover's distance (EMD) as a cross-bin distance measure for estimating the similarity of color and texture histograms for image retrieval applications.

According to www.en.wikipedia.org the EMD can be described as "a mathematical measure of the distance between two distributions over some region D. Informally, if the distributions are interpreted as two different ways of piling up a certain amount of dirt over the region D, the EMD is the minimum cost of turning one pile into the other; where the cost is assumed to be amount of dirt moved times the distance by which it is moved".

Further, the EMD is e.g. successfully applied for image registration [1] and as a distance measure for feature extraction [9]. It has been argued that the EMD mimics better the human perception of texture similarities. As shown by Levina and Bickel there is a close relationship between the EMD and the Mallows distance which is defined on probability distributions. Since the EMD is the result of an optimization task, the high computational costs often hindered its employment to a broader range of practical applications. Recently Shirdonkar and Jacobs [10] proposed a fast estimation of the EMD by transferring the difference histogram or distribution into the wavelet domain. The algorithm increases only linear with the number of bins in the histogram but exponentially with the dimension of the histograms.

***Object of the invention:***

It is the object of the present invention to make more efficient the multi-parameter computer-based automated design of real-world objects, by automatically grouping functional interrelated design variables, i.e. design variables having an interrelation value exceeding a preSet value.

Normally the design process ends with a electronic "building plan" for the real-world object, which building plan can be transferred automatically into the corresponding real-world object using e.g. computerized production tools (CNC, 3D printer, ...) . Thus improved real-world objects can be designed having improved performance, as expressed in one or more physical parameters.

This object is achieved by means of the features of the independent claims. The dependent claims develop further the central idea of the present invention.

A first aspect of the invention resides in a method for the computerized design of real-world objects, using knowledge of already existing designs and their physical performance numbers. During the design process a plurality of design variables $Xi$ are adapted. The result of the design has improved physical performance numbers Yj when converted into the real-world object. The design process is decomposed in parallel streams of optimization modules. Each optimization module individually optimizes a group of functionally interrelated design variables (the interrelation being expressed by the interrelation information). The functional interrelation between design variables $Xi$ is evaluated using interaction information representing the functional dependency between design variables $Xi$ and the physical performance numbers $Yj$. The interaction information is calculated as the distance between observed and estimated probability distributions of the functional dependency between design variables Xi and the physical performance numbers Yj.

The distance measure can be a KLD value or a EMD value. The physical performance numbers Yj can be one or more of hydrodynamic or aerodynamic parameters, weight or strength of the real-world object.

The invention also relates to a land, air or sea vehicle, designed using the above-specified method.

Further advantages, objects and features of the invention will become evident to the skilled person when going through the following detailed description of embodiments, when taken in conjunction with the figures of the enclosed drawings.

**Fig. 1** shows the Identification of interrelated design or design variable. All the necessary data is stored in the data pool. This includes the geometries as well as the performance numbers.

**Fig. 2** shows the integration of the interaction analysis for the decomposition of complex design ensembles into design parts that can be optimized in parallel.

Given a certain design at hand, dedicated modifications of the geometry are created by modifying the appropriate values of its parametric representation. A variation of the parameter values influences the shape of the geometry. As an example, the defined parameter can be the position of the control-points of a spline or the position of the vertices of an unstructured surface mesh representation. Usually, the performance numbers of the designs are retrieved by generating a physical or computational model of the entire design and applying selected experimental measuring techniques and algorithms to it, e.g. Finite Element Methods (FEM), Computational Fluid Dynamics (CFD) simulations or wind tunnel tests.

The increase of the number of design variables to an unmanageable size can dramatically slow down the optimization process, because of the explosion in the number of possible solutions. The fusion of the design variable into several groups is required to handle a huge number of design variables. In practice this is done based on the experience of the design engineer or just based on the proximity of the related design parts. Commonly, beside its direct influence, the impact of a design variable on the performance number depends on the value of other parameters.

The invention proposes a computational method that identifies functional interrelated design variables and assigns them to one and the same group. This is done based on the analysis of existing geometries and performance measurements. The acquired information about the interrelations is then integrated into the design process in order to increase its efficiency.

Usually, measurement errors or instabilities of the evaluation methods, which are used for the calculation of the performance numbers, complicate the analysis of the interrelations or distort the extracted information. Known methods for estimating the interaction information can not deal with such kind of "noise". Small perturbations can have a strong effect on the estimated quantity. The target of this invention is to provide a methodology that retrieves a robust estimate of the interaction information. Small perturbations should only have a marginal influence on the estimate.

During the optimization of a design, the number of design instances in the data pool increases steadily. Thus, the analysis of the interactions between the design variables and the system performance is potentially done based on different number of instances in the pool. It is required that the estimation of the interaction information is widely stable for different number of data samples as long as the underlying dependencies between the design variable do not change. The described inventive process will lead to such an invariant estimate.

### Detail of the invention:

It is assumed that a pool of designs (e.g. a pool of automotive chassis designs) is parameterized and described by a set of $N$ design variables $X = \{X_1, X_2, ..., X_N\}$ which control the actual geometric appearance of a design. Let further assume that a set of $M$ dependent variables $Y = \{Y_1, Y_2, ... Y_M\}$ is stored in the design pool which quantify the performance or certain properties of the design. The mutual information or two-way interaction information quantifies the dependency between a design variable $X_i$ and the performance number $Y_j$. The mutual information in terms of Shannon entropies can be formalized as follows:

$$I(X_i; Y_j) = H(X_i) + H(Y_j) - H(X_i, Y_j).$$

The mutual information is applicable and limited to the identification of the direct influence of a single design variable on a single performance number. The quantification of the influence of one design variable dependent on another one is not possible. Therefore the interaction information measurement has to be applied which is defined for multiple attributes as follows:

$$I(S) = -\sum_{T \subseteq S} (-1)^{|S|-|T|} H(T).$$

The interaction information is calculated as an alternating sum of joint and marginal entropies where $T$ is a subset of all possible combinations of the variables in $S$. As an example, let $S$ contain a set of $K$ design variables and one characteristic performance number $S = \{X_1, X_2, ..., X_K, Y_j\}$. $S$ is a subset of all available design variables which are object for the identification of the interactions and the considered performance number.

The interaction information can be understood as the quantification of how much information one can gain from the fusion of all $K$ variables about the performance value that can not be gained from observing all the sub parts of the design variables separately. For $K=2$ this means that the term $I(X_1 X_2, Y)$ quantifies the information gain on the performance $Y$ when combing both variables that can not be gained from the mutual information of the single design variable on the performance.

As shown by Jakulin and Bratko the interaction information $I(S)$ can also be estimated as the KLD of the observed joint entropy of the considered variables $p(S)$ from the part-to-whole approximation of the joint probability distribution $\hat{p}(S)$. Thus the interaction information can be formalized as

$$I(S) \approx D_{KLD}\big(p(S) \| \hat{p}(S)\big).$$

One technique for calculating the part-to-whole approximation is the KSA. For the set of variables in $S$ the KSA is defined as follows,

$$\hat{p}(S) = \frac{\prod\limits_{T_{L-1} \subseteq S} p(T_{L-1})}{\dfrac{\prod\limits_{T_{L-2} \subseteq S} p(T_{L-2})}{\vdots}}{\prod\limits_{T_1 \subseteq S} p(T_1)},$$

where $T_i$ is a subset of $S$ and $|S| = L$. The KSA does not always produce a valid probability distribution and thus has to be normalized. From this special case one can generalize that the interaction information $I(S)$ can be seen as the quantification of the difference between the joint probability distribution and its part-to-whole approximation. Jakulin and Bratko used the KLD to quantify the distance between two distributions. The KLD is a bin-by-bin distance measure.

An alternative approach to the KLD is the use of a cross-bin distance measure. One candidate is the EMD or one of its realizations like the wavelet EMD. The EMD is the solution of a mass transportation problem. It finds the minimal costs that are needed to transport one distribution into the other one, given a defined ground distance. For a more formal definition of the EMD the reader is referred to Rubner, Shirdhonkar or Levina. Thus the estimate of the interaction information can formally be defined as the EMD of the joint probability distribution observed from the data to its part-to-whole approximation,

$$I(S) \approx D_{EMD}\big(p(S) \| \hat{p}(S)\big).$$

The estimate of the interaction information according to the invention is more robust against quantization errors, small amounts of noise and that the estimate is stable for different number of data samples as long as the underlying dependency structure does not change.

This invention proposes the integration of the interaction information estimates into the optimization process in order to identify related design parts. Hereby, the interaction information is estimated by the calculation of the distance between two distributions, namely the observed joint probability distribution and its part-to-whole approximation, e.g. using the KSA. The probability distributions are generated based on already existing real-world designs and performance measurements made with these, which data are stored in a design pool. The metric for the calculation of the distance can be e.g. bin-by-bin measure like the KLD or a cross-bin-technique like the EMD. The identified interrelations can be used to group design variable related to its functional relevance.

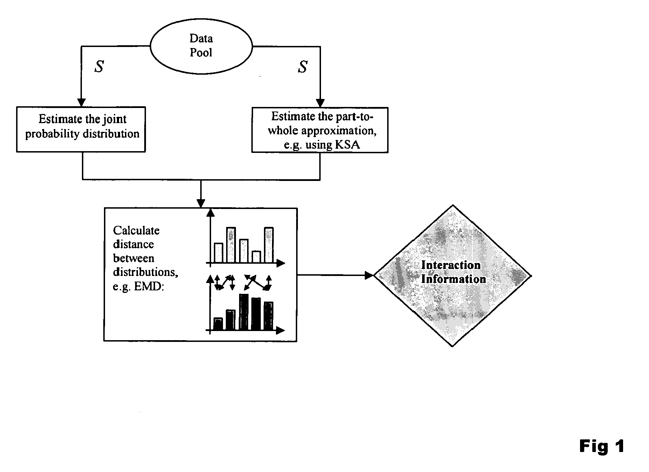

Fig. 1 summarizes the aspect of the present invention of calculating the interaction information from multiple design variables and its joint influence on the performance. The basis for the calculation is a data pool that stores instances of the design ensemble by means of parameter values of the geometric representation and the related physical performance numbers. The data in the data pool is potentially retrieved from previous optimization runs or from verification and test experiments. For a holistic analysis of the interaction information, all n-way-interactions ($n = [_1...K]$) have to be considered.

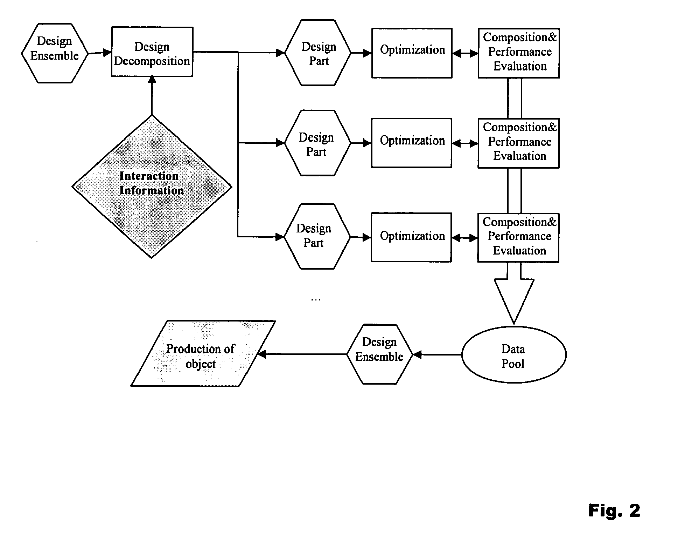

The integration of the extracted interaction information into the design process is depicted in Fig. 2. Here the interaction information is used to decompose the design ensemble into design parts. Each design part ("design stream") comprises a set of design variables which are functionally interrelated. The design parts can then be optimized in parallel, independent of the other design parts, the parallelization being done such that highly correlated design variables are optimized commonly in one group. The geometries and performance numbers which are generated during the entire optimization process are stored in the data pool and thus can be used for future interaction analysis. After all, the optimized design can be produced or be the basis for a following optimization.

### Aspects of the invention:

For the analysis of dependencies between design variables and physical performance numbers the calculation of the interaction information is suggested. This invention proposes the estimation of the interaction information by means of calculating the distance between the joint probability distribution and its part-to-whole approximation. The joint and marginal probability distributions are estimated from existing design and performance data. The distance measure between two distributions can be the KLD or the EMD.

The interaction information is utilized for the optimization of design ensembles. The extracted interaction information is used to decompose the ensemble into functional independent design parts, what is expected to make the optimization more efficient.

### Application Areas

The invention can be applied for the optimization and production of land, sea or air vehicles (or parts thereof), such as e.g. the optimization of racing cars, road vehicles, airplanes or engine parts.

### Nomenclature

KLD   Kullback-Leibler-Divergence
KSA   Kirkwood Superposition Approximation
EMD   Earth Mover's Distance

### References:

[1] C.H. Christope, *Intensity-based Image Registration using Earth Mover's Distance,* US patent application US2008039706

[2] L. Graening, M. Olhofer, B. Sendhoff, Interaction Detection in Aerodynamic Design Data, to appear in Proceedings of the 10th International Conference on Intelligent Data Engineering and Automated Learning, 23rd -26th Sept. 2009, Burgos, Spain

[3] J. Jaccard, R. Turrisi, Interaction effects in Multiple Regression, SAGE Publications, 2003

[4] A. Jakulin, Machine Learning Based on Attribute Interactions, PhD Dissertation, 2005

[5] A. Jakulin, I. Bratko, Testing the Significance of Attribute Interactions, Proceedings of the Twenty-first International Conference on Machine Learning (ICML-2004), Eds. R. Greiner and D. Schuurmans, pp. 409-416, Banff, Canada, 2004

[6] A. Jakulin, I. Bratko, D. Smrke, J. Demsar, B. Zupan, Attribute Interactions in Medical Data Analysis, Proceedings of the 9th Conference on Artificial Intelligence in Medicine in Europe (AIME 2003), Protaras, Cyprus, Oct. 18-22, Eds. M. Dojat and E. Keravnou and P. Barahona, Lecture Notes in Artificial Intelligence, vol. 2780, pp. 229-238, 2003

[7] E. Levina, P. Bickel, The Earth Mover's Distance is the Mallows Distance: Some Insights from Statistics, Proceedings of the 8th IEEE International Conference on Computer Vision, ICCV, vol. 2, pp. 251-256, 2001

[8] Y. Rubner, C. Tomasi, L.J. Guibas, The Earth Mover's Distance as a Metric for Image Retrieval, International Journal of Computer Vision, 40(2), pp. 99-121, Kluwer Academic Publisher, 2000

[9] R. Sandler, M. Lindenbaum, Nonnegative Matrix Factorization with Earth Mover's Distance Metric, Proceedings of the IEEE Computer Society Conference on Computer Vision and Pattern Recognition, CVPR, pp.1-8, 2009

[10] S. Shirdonkar, D. W. Jacobs, Approximate Earth Mover's Distance in Linear Time, Proceedings of the IEEE Computer Society Conference on Computer Vision and Pattern Recognition, CVPR, pp.1-8, 2008

## Claims

**1.** A method for the computerized design of real-world object, using knowledge of already existing designs and their physical performance numbers, wherein during the design process a plurality of design variables $X_i$ are adapted, and wherein the result of the design has improved physical performance numbers $Y_j$ when converted into the real-world object, wherein the design process is decomposed in parallel streams of optimization modules, each optimization module individually optimizing a group of interrelated design variables, the functional interrelation between design variables $X_i$ being evaluated using an interaction information $I$ representing the functional dependency between design variables $X_i$ and the physical performance

numbers $Y_j$, the interaction information $I(S)$ being calculated as

$$I(S) = D\big(p(S) \,\|\, \hat{p}(S)\big)$$

i.e. the distance $D$ between the observed joint probability distribution $p(S)$ and part-to-whole approximation of the joint probability distribution $\hat{p}(S)$ of the functional dependency between design variables $X_i$ and the physical performance numbers $Y_j$, of already existing designs, $S$ being a set of all considered design variables and the physical performance numbers.

**2.** The method according to claim 1, wherein the distance measure is the KLD.

**3.** The method according to claim 1, wherein the distance measure is the EMD.

**4.** The method according to any of the preceding claims, wherein the physical performance numbers comprise one or more of hydrodynamic or aerodynamic parameters, weight or strength of the real-world object.

**4.** A computer software program product, implementing a method according to any of the preceding steps when run on a computing device.

**5.** A land, air or sea vehicle, designed using the method of any of claims 1 to 4.

**Amended claims in accordance with Rule 137(2) EPC.**

**1.** A method for the computerized design of physical object, using knowledge of already existing designs and their physical performance numbers, the method comprising

- obtaining from the physical object design variables by parameterizing the of physical object,
- estimating interaction information by analyzing dependencies between the design variables and physical performance numbers, wherein the estimation of the interaction information is performed by calculating the distance between a probability distribution and its part-to-whole approximation, wherein the probability distribution is estimated from existing design and performance data,
- identifying functional interrelated design variables and assigning them to groups, so that each group comprises a set of design variables which are functionally interrelated,
- optimizing the groups in parallel independently, the parallelization being performed such that functional interrelated design variables are optimized in one group, wherein the optimization is performed on a number of design instances in a data pool of design instances,
- generating geometries and performance numbers during the optimization process, and
- storing the generated geometries and performance numbers in the data pool of design instances to be used for future analysis of dependencies between design variables and physical performance numbers,
- providing the optimized design of the physical object suitable for production of the optimized physical object.

**2.** The method according to claim 1, wherein the distance measure is the KLD.

**3.** The method according to claim 1, wherein the distance measure is the EMD.

**4.** The method according to any of the preceding claims, wherein the physical performance numbers comprise one or more of hydrodynamic or aerodynamic parameters, weight or strength of the physical object.

**5.** A computer software program product, implementing a method according to any of the preceding steps when run on a computing device.

**6.** A land, air or sea vehicle, designed using the method of any of claims 1 to 4.

Fig 1

**Fig. 2**

Europäisches
Patentamt

European
Patent Office

Office européen
des brevets

# EUROPEAN SEARCH REPORT

**Application Number**

EP 09 17 1955

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LARS GRAENING ET AL: "Knowledge Extraction from Aerodynamic Design Data and its Application to 3D Turbine Blade Geometries" JOURNAL OF MATHEMATICAL MODELLING AND ALGORITHMS, KLUWER ACADEMIC PUBLISHERS, DO, vol. 7, no. 4, 4 December 2008 (2008-12-04), pages 329-350, XP019644239 ISSN: 1572-9214 | 1-4 | INV. G06F17/50 |
| X | * the whole document, in particular sections 1.1 Guiding Aerodynamic Design Optimisation and 4 Application to 3D Turbine Blade Design Data * ----- | 5 | |
| D,Y | JAKULIN A ET AL: "Testing the significance of attribute interactions" PROCEEDINGS, TWENTY-FIRST INTERNATIONAL CONFERENCE ON MACHINE LEARNING, ICML 2004 - PROCEEDINGS, TWENTY-FIRST INTERNATIONAL CONFERENCE ON MACHINE LEARNING, ICML 2004 2004 ASSOCIATION FOR COMPUTING MACHINERY US, 2004, pages 409-416, XP002576444 * section 2.2. Kullback-Leibler Divergence as a Statistic * ----- | 1,2,4 | |
| Y | YOSSI RUBNER ET AL: "The Earth Mover's Distance as a Metric for Image Retrieval" INTERNATIONAL JOURNAL OF COMPUTER VISION, KLUWER ACADEMIC PUBLISHERS, BO, vol. 40, no. 2, 1 January 2000 (2000-01-01), pages 99-121, XP007910189 ISSN: 1573-1405 * section 4. The Earth Mover's Distance ----- | 1,3,4 | |

TECHNICAL FIELDS
SEARCHED (IPC)

G06F

The present search report has been drawn up for all claims

| Place of search | Date of completion of the search | Examiner |
|---|---|---|
| Munich | 7 April 2010 | Lerbinger, Klaus |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008039706 A

**Non-patent literature cited in the description**

- **L. Graening ; M. Olhofer ; B. Sendhoff.** Interaction Detection in Aerodynamic Design Data. *Proceedings of the 10th International Conference on Intelligent Data Engineering and Automated Learning,* 23 September 2009
- **J. Jaccard ; R. Turrisi.** Interaction effects in Multiple Regression. SAGE Publications, 2003
- **A. Jakulin.** Machine Learning Based on Attribute Interactions. PhD Dissertation, 2005
- Testing the Significance of Attribute Interactions. **A. Jakulin ; I. Bratko.** Proceedings of the Twenty-first International Conference on Machine Learning. 2004, 409-416
- Attribute Interactions in Medical Data Analysis. **A. Jakulin ; I. Bratko ; D. Smrke ; J. Demsar ; B. Zupan.** Proceedings of the 9th Conference on Artificial Intelligence in Medicine in Europe (AIME 2003). Lecture Notes in Artificial Intelligence, 18 October 2003, vol. 2780, 229-238
- **E. Levina ; P. Bickel.** The Earth Mover's Distance is the Mallows Distance: Some Insights from Statistics. *Proceedings of the 8th IEEE International Conference on Computer Vision, ICCV,* 2001, vol. 2, 251-256
- The Earth Mover's Distance as a Metric for Image Retrieval. **Y. Rubner ; C. Tomasi ; L.J. Guibas.** International Journal of Computer Vision. Kluwer Academic Publisher, 2000, vol. 40, 99-121
- **R. Sandler ; M. Lindenbaum.** Nonnegative Matrix Factorization with Earth Mover's Distance Metric. *Proceedings of the IEEE Computer Society Conference on Computer Vision and Pattern Recognition, CVPR,* 2009, 1-8
- **S. Shirdonkar ; D. W. Jacobs.** Approximate Earth Mover's Distance in Linear Time. *Proceedings of the IEEE Computer Society Conference on Computer Vision and Pattern Recognition, CVPR,* 2008, 1-8